# EUROPÄISCHE PATENTSCHRIFT

(11) **EP 2 847 539 B1**
(45) Veröffentlichungstag und Bekanntmachung des Hinweises auf die Patenterteilung: **12.02.2020**
(21) Anmeldenummer: 12719703.6
(22) Anmeldetag: 07.05.2012
(51) Int. Cl.: G01B 11/00, G01B 21/04, G02B 21/06

(54) **WECHSELBARES BELEUCHTUNGSMODUL FÜR EIN KOORDINATENMESSGERÄT**
REPLACEABLE ILLUMINATION MODULE FOR A CO-ORDINATE MEASURING MACHINE
MODULE D'ÉCLAIRAGE INTERCHANGEABLE POUR UN APPAREIL DE MESURE DE COORDONNÉES

(43) Veröffentlichungstag der Anmeldung: 18.03.2015
(73) Patentinhaber: Carl Zeiss Industrielle Messtechnik GmbH, 73447 Oberkochen (DE)
(72) Erfinder: ENGEL, Thomas, 73432 Aalen (DE)
(74) Vertreter: Witte, Weller & Partner Patentanwälte mbB
(86) Internationale Anmeldenummer: PCT/EP2012/058393
(87) Internationale Veröffentlichungsnummer: WO 2013/167167

(56) Entgegenhaltungen:
- EP-A2- 0 362 625
- EP-A2- 1 072 884
- EP-A2- 1 580 521
- EP-B1- 1 373 827
- DE-A1-102006 035 179
- US-A- 5 825 666
- US-A1- 2008 134 486
- US-B1- 6 772 527

## Beschreibung

Die vorliegende Erfindung betrifft gemäß einem ersten Aspekt ein Beleuchtungsmodul für ein Koordinatenmessgerät zum Vermessen eines Werkstücks mittels eines optischen Sensors, wobei das Beleuchtungsmodul mit dem optischen Sensor zumindest mittelbar koppelbar ist, wobei das Beleuchtungsmodul einen Grundkörper mit einer Sensorseite und einer Werkstückseite aufweist, wobei die Sensorseite eine erste Schnittstelleneinrichtung zumindest zum sensorseitigen Koppeln des Beleuchtungsmoduls in einer definierten Lage aufweist, und wobei das Beleuchtungsmodul mindestens eine Beleuchtungsanordnung zum Beleuchten des Werkstücks aufweist. Der erste Aspekt der Erfindung ist im Anspruch 1 beansprucht.

Gemäß einem zweiten Aspekt betrifft die vorliegende Erfindung ein Koordinatenmessgerät mit einem solchen Beleuchtungsmodul. Der zweite Aspekt der Erfindung ist im Anspruch 11 beansprucht.

Ein Beleuchtungsmodul ist beispielsweise aus der Druckschrift EP 0 362 625 A2 bekannt.

Gemäß einem dritten Aspekt betrifft die vorliegende Erfindung des Weiteren ein Verfahren zum Aufnehmen eines Beleuchtungsmoduls eines Koordinatenmessgeräts zum Vermessen eines Werkstücks mittels eines optischen Sensors, wobei das Koordinatenmessgerät mindestens ein erstes Beleuchtungsmodul, das mit dem optischen Sensor zumindest mittelbar koppelbar ist, und eine Halteeinrichtung mit mindestens einem ersten Magazinplatz für das erste Beleuchtungsmodul aufweist. Der dritte Aspekt der Erfindung ist im Anspruch 12 beansprucht.

Koordinatenmessgeräte sind im Stand der Technik allgemein bekannt. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie beispielsweise von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen.

Sensorsysteme mit optischen Sensoren finden in der Koordinatenmesstechnik zunehmend Bedeutung. Dabei zeichnen sich optische Sensoren insbesondere durch eine hohe Geschwindigkeit des Messvorgangs aus. Auf diese Weise lassen sich viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Klassischerweise ist der optische Sensorkopf bzw. der optische Sensor mit einem Trägersystem verbunden, welches das optische Sensorsystem stützt und bewegt. Im Stand der Technik sind verschiedene Trägersysteme bekannt, beispielsweise Portalsysteme, Ständer-, Horizontalarm- und Armsysteme, und alle Arten von Robotersystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Des Weiteren ist es in der Koordinatenmesstechnik üblich, dass bei der Vermessung von Objekten mit unterschiedlichen Beleuchtungsarten gearbeitet werden kann. Die entsprechenden optischen Sensoren weisen dann eine Videokamera und/oder eine Bildkamera und eine entsprechende Beleuchtung für das Werkstück auf. Des Weiteren ist eine feste Abbildungsoptik vorgesehen, die das zu vermessende Werkstück auf die Kamera bzw. die optischen Sensoren der Kamera abbildet. Für jeden Anwendungsfall bzw. jede Messart sind dabei in der Regel spezifische optische Sensoren mit fest integrierten Beleuchtungen und Abbildungsoptiken vorgesehen.

Beispielsweise zeigt die eingangs genannte Druckschrift EP 0 362 625 A2 eine auswechselbare Frontoptik für einen optischen Tastkopf. Diese Frontoptik ist für einen bestimmten Arbeitsabstand und eine bestimmte Beleuchtungsart ausgebildet. Des Weiteren weist sie das gesamte Objektiv auf, das von dem Werkstück reflektierte Lichtstrahlen auf den optischen Sensor abbildet.

Eine derartige Frontoptik ist jedoch aufgrund der optischen Elemente zum Abbilden relativ schwer und weist ein relativ großes Volumen auf. Des Weiteren ist eine solche Frontoptik nur für einen bestimmten Anwendungsfall, d.h. in einem bestimmten Arbeitsabstand und für eine bestimmte Beleuchtungsart, verwendbar.

In den Druckschriften EP 0 385 262 A2 und EP 1 373 827 B1 sind darüber hinaus ebenfalls Beleuchtungseinrichtungen für Koordinatenmessgeräte angegeben, die zum einen Abbildungsoptiken aufweisen und zum anderen relativ komplex ausgebildete, beispielsweise schwenk- oder bewegbare Beleuchtungselemente aufweisen, um die Beleuchtung auf verschiedene Arbeitsabstände einzustellen. Auch daraus resultiert jedoch ein relativ komplexer Aufbau solcher Beleuchtungselemente sowie ein eventuell höheres Gewicht und Volumen, was aufgrund der damit verbundenen höheren Trägheit das Regeln des optischen Sensorkopfs, insbesondere bei schnellen Messvorgängen, erschwert.

Die Druckschrift US 5 825 666 A zeigt ein optisches Koordinatenmessgerät und einen optischen Tastsensor. Insbesondere betrifft es optische Tastsensoren, bei denen eine Bewegung entlang jeder der Achse eines kartesischen Koordinatensystems und eine Rotation um die Z-Achse optisch gemessen wird.

Die Druckschrift EP 1 072 884 A2 betrifft Verbesserungen bezüglich Ringlichter.

Die Druckschrift US 6 772 527 B1 betrifft ein modulares Messgerät, das, anbringbar an einer Pinole eines Koordinatenmessgeräts, irgendeine von der Mehrzahl von Taststifthaltemodulen aufweist.

Die Druckschrift DE 10 2006 035 179 A1 betrifft eine optische Vorrichtung einer Beleuchtungseinrichtung zum Beleuchten eines Objektes und eine Beleuchtungseinrichtung zum Beleuchten eines Objektes.

Die Druckschrift EP 1 580 521 A2 betrifft ein Koordinatenmessgerät mit Wechseloptik und insbesondere ein Wechseloptiksystem für Koordinatenmessgeräte mit Lasersensor-Technik.

Es ist daher eine Aufgabe der vorliegenden Erfindung, ein Beleuchtungsmodul für ein Koordinatenmessgerät mit einem optischen Sensor anzugeben, das einfach aufgebaut ist und eine größtmögliche Flexibilität bei der Verwendung des optischen Sensors des Koordinatenmessgeräts ermöglicht.

Erfindungsgemäß wird daher gemäß einem ersten Aspekt vorgeschlagen, das eingangs genannte Beleuchtungsmodul dahingehend weiterzubilden, dass der Grundkörper die Form eines Rings mit einem freien Zentralbereich oder einem Randbereich aufweist, wobei die mindestens eine Beleuchtungsanordnung und die erste Schnittstelleneinrichtung in dem Randbereich angeordnet sind, wobei das Beleuchtungsmodul eine Wechselschnittstelleneinrichtung zum Koppeln des Beleuchtungsmoduls mit einem Magazinplatz des Koordinatenmessgeräts aufweist, und wobei die erste Schnittstelleneinrichtung eine mechanische Kopplungseinrichtung zum sensorseitigen Koppeln des Beleuchtungsmoduls und/oder zumindest einen Permanentmagneten zum sensorseitigen Koppeln des Beleuchtungsmoduls aufweist.

Unter einem "Ring" ist dabei ein beliebiger geschlossener Querschnitt zu verstehen. Der Begriff "Ring" bedeutet somit nicht zwangsweise, dass der Querschnitt um eine Achse rotiert wird, so dass sich ein kreisförmiger Ring ergibt. Unter einem "Ring" wird das Extrudieren eines Querschnitts entlang einer beliebigen geschlossenen Linie verstanden. Beispielsweise kann der "Ring" somit auch eine viereckige Außenform aufweisen, wie sie beispielsweise entsteht, wenn ein beliebiger Querschnitt, beispielsweise ein Kreis oder ein Rechteck, entlang einer geschlossenen quadratischen Linie extrudiert wird.

Dabei bleibt ein zentraler Bereich frei, der freie Zentralbereich. Der Bereich, in dem sich der Grundkörper ringförmig erstreckt, ist dann der Randbereich. Unter "frei" ist somit zu verstehen, dass das Beleuchtungsmodul letztendlich eine mittige Aussparung aufweist. Durch diese mittige Aussparung kann das Licht, das letztendlich auf den optischen Sensor abgebildet werden soll, ohne Strahlablenkung hindurchtreten.

In dem Randbereich sind dann die mindestens eine Beleuchtungsanordnung und die erste Schnittstelleneinrichtung zum sensorseitigen Koppeln des Beleuchtungsmoduls angeordnet.

Unter "sensorseitig" wird dabei diejenige Seite des Beleuchtungsmoduls verstanden, die in Richtung des optischen Sensors weist. Sie liegt einer "werkstückseitigen" Seite des Beleuchtungsmoduls gegenüber, die in Richtung des Werkstücks weist. Von der werkstückseitigen Seite des Beleuchtungsmoduls wird darüber hinaus das Licht zur Beleuchtung des Werkstücks abgestrahlt.

Auf diese Weise wird ein Beleuchtungsmodul bereitgestellt, das in Form eines die Beleuchtung tragenden Rings ausgestaltet ist. Der freie Zentralbereich erlaubt ein Durchtreten von dem Werkstück reflektierter Lichtstrahlung auf den optischen Sensor. Auf jedwede Abbildungsoptiken kann daher verzichtet werden. Dieser Aufbau erlaubt eine leicht und auf das Wesentliche reduzierte Ausgestaltung des Beleuchtungsmoduls, was letztendlich ermöglicht, das Beleuchtungsmodul anwendungsspezifisch schnell auszuwechseln. Das Wechseln des Beleuchtungsmoduls kann dabei sowohl manuell als auch automatisch erfolgen. Auf diese Weise wird es möglich, verschiedene Standard-Beleuchtungsarten, aber auch kundenspezifische Lösungen für spezielle Beleuchtungen im Zusammenhang mit einem auf übliche Weise ausgestalteten optischen Sensor bereitzustellen.

Gemäß einem zweiten Aspekt wird vorgeschlagen, ein Koordinatenmessgerät zum Vermessen eines Werkstücks mittels eines optischen Sensors bereitzustellen, wobei das Koordinatenmessgerät mindestens ein Beleuchtungsmodul, insbesondere mehrere Beleuchtungsmodule, gemäß dem ersten Aspekt der Erfindung aufweist und des Weiteren eine Halteeinrichtung mit mindestens einem Magazinplatz, insbesondere mehreren Magazinplätzen, für das Beleuchtungsmodul bzw. die Beleuchtungsmodule aufweist.

Die mechanische Kopplungseinrichtung kann beispielsweise mittels ineinander eingreifender Vorsprünge bzw. Ausnehmungen oder durch mindestens eine Klemmvorrichtung bereitgestellt sein. Eine derartige mechanische Kopplungseinrichtung stellt den Vorteil bereit, dass sie während des Betriebs nicht mit Energie versorgt werden muss, um das Beleuchtungsmodul mit einem optischen Sensor zu koppeln.

Auch mittels einer derartigen magnetischen Kopplungseinrichtung kann ein sicheres Koppeln des Beleuchtungsmoduls mit dem optischen Sensor bereitgestellt werden. Darüber hinaus müssen die Permanentmagneten jedenfalls nicht aktiv mit Energie versorgt werden, um die Kopplung bereitzustellen. Des Weiteren lässt sich eine derartige, mittels zumindest eines Permanentmagneten bereitgestellte Kopplung durch eine einfache Relativbewegung zwischen dem Beleuchtungsmodul und dem optischen Sensor wieder trennen, wenn die entsprechend von Aktuatoren eines den optischen Sensor tragenden Maschinengestells aufgebrachte Kraft größer als die Magnetkraft des mindestens einen Permanentmagneten ist. In einem Magazinplatz des Beleuchtungsmoduls sind eindeutig bestimmte Auflagepunkte vorgesehen, um seine Position reproduzierbar über den Wechselprozess hinweg für das jeweilige Beleuchtungsmodul sicher zu stellen.

Auf diese Weise wird es besonders einfach möglich, das Beleuchtungsmodul in den Magazinplatz zu verbringen und dort festzuhalten. Beispielsweise kann die Wechselschnittstelleneinrichtung einfach mittels einer umlaufenden Nut bzw. einem umlaufenden Vorsprung bereitgestellt sein, der sich ganz oder teilweise um den Außenumfang des Beleuchtungsmoduls erstreckt und mit in einem entsprechenden Magazinplatz komplementär bereitgestellten Ausnehmungen bzw. Vorsprüngen ineinander greift.

Auf diese Weise wird es möglich, beispielsweise das Beleuchtungsmodul automatisch zu wechseln. Die Halteeinrichtung kann etwa mehrere Magazinplätze aufweisen, in denen jeweils ein Beleuchtungsmodul abgelegt ist. Mittels des ohnehin für die Bewegung des optischen Sensorkopfs vorgesehenen Maschinengestells kann auf diese Weise gezielt ein Magazinplatz mittels des optischen Sensors angefahren werden und mit einem Beleuchtungsmodul gekoppelt werden. Auf diese Weise lassen sich auch gezielt Beleuchtungsmodule wieder in einem Magazinplatz ablegen und eine Kopplung eines Beleuchtungsmoduls mit dem optischen Sensor wieder trennen. Anschließend kann dann beispielsweise ein anderes Beleuchtungsmodul aufgenommen werden. Insbesondere kann für die Beleuchtungsmodule eine Wechselschnittstelle vorgesehen sein, die denen der Tasterteller von taktilen Sensoren entspricht. Dies macht es möglich, die Magazinplätze sowohl für Tasterteller als auch für Beleuchtungsmodule zu verwenden. Eine Regelungseinrichtung des Koordinatenmessgeräts kann dann speichern, in welchem der Magazinplätze welche Art von Beleuchtungsmodul oder Tasterteller abgelegt ist. So kann die Zahl der benötigten Magazinplätze minimiert und die Flexibilität in der Anwendung optimiert werden.

Gemäß einem dritten Aspekt der Erfindung wird vorgeschlagen, ein Verfahren zum Aufnehmen eines Beleuchtungsmoduls eines Koordinatenmessgeräts zum Vermessen eines Werkstücks mittels eines optischen Sensors bereitzustellen, wobei das Koordinatenmessgerät mindestens ein erstes Beleuchtungsmodul, das mit dem optischen Sensor zumindest mittelbar koppelbar ist, und eine Halteeinrichtung mit mindestens einem ersten Magazinplatz für das erste Beleuchtungsmodul aufweist, wobei das Beleuchtungsmodul (24) einen Grundkörper (61) mit einer Sensorseite (62) und einer Werkstückseite (64) aufweist, wobei die Sensorseite (62) eine erste Schnittstelleneinrichtung (58) zumindest zum sensorseitigen Koppeln des Beleuchtungsmoduls (24) in einer definierten Lage aufweist, und wobei das Beleuchtungsmodul (24) mindestens eine Beleuchtungsanordnung (88, 104, 106) zum Beleuchten des Werkstücks (18) aufweist, wobei der Grundkörper (61) die Form eines Rings mit einem freien Zentralbereich (78) und einem Randbereich (80) aufweist, wobei die mindestens eine Beleuchtungsanordnung (88, 104, 106) und die erste Schnittstelleneinrichtung (58) in dem Randbereich (80) angeordnet sind, wobei das Beleuchtungsmodul (24) eine Wechselschnittstelleneinrichtung (96) zum Koppeln des Beleuchtungsmoduls (24) mit dem ersten Magazinplatz (42, 44, 46) des Koordinatenmessgeräts (10) aufweist, und wobei die erste Schnittstelleneinrichtung (58) eine mechanische Kopplungseinrichtung zum sensorseitigen Koppeln des Beleuchtungsmoduls (24) und/oder zumindest einen Permanentmagneten (74) zum sensorseitigen Koppeln des Beleuchtungsmoduls (24) aufweist, mit den folgenden Schritten:
- Bewegen des optischen Sensors des Koordinatenmessgeräts und eines das erste Beleuchtungsmodul aufweisenden ersten Magazinplatzes relativ zueinander in eine erste Position, in der der optische Sensor und das erste Beleuchtungsmodul mittels einer translatorischen und/oder rotatorischen Bewegung relativ zueinander zumindest mittelbar koppelbar sind,
- Ausführen einer translatorischen und/oder rotatorischen relativen Bewegung zwischen dem optischen Sensor und dem ersten Beleuchtungsmodul zum zumindest mittelbaren Koppeln des optischen Sensors mit dem ersten Beleuchtungsmodul, und
- Bewegen des mit dem optischen Sensor zumindest mittelbar gekoppelten ersten Beleuchtungsmoduls aus dem ersten Magazinplatz.

Auf diese Weise wird es möglich, mittels eines einfachen Bewegungsablaufs unter Zuhilfenahme von ohnehin in dem Koordinatenmessgerät vorhandenen Aktuatoren ein Beleuchtungsmodul mit dem optischen Sensor zu koppeln und es aus seinem entsprechenden Magazinplatz zu entnehmen. Insbesondere kann es sich bei der relativen Bewegung zwischen dem optischen Sensor und dem ersten Beleuchtungsmodul um eine rein translatorische Bewegung handeln.

Gemäß einem vierten Aspekt der Erfindung wird des Weiteren ein Computerprogrammprodukt mit Programmcodemitteln bereitgestellt, die dazu ausgebildet sind, ein Verfahren gemäß dem dritten Aspekt der Erfindung oder einer seiner Ausführungsformen auszuführen, wenn sie auf einer Regelungseinrichtung eines Koordinatenmessgeräts ausgeführt werden.

Die eingangs gestellte Aufgabe wird daher vollkommen gelöst.

In einer Ausführungsform der Erfindung kann dabei vorgesehen sein, dass die mindestens eine Beleuchtungsanordnung mindestens einen Lichtleiter und/oder mindestens ein refraktives optisches Element und/oder mindestens ein diffraktives optisches Element und/oder mindestens ein holografisches optisches Element und/oder mindestens ein reflektierendes optisches Element aufweist.

Alle diese Arten von optischen Elementen können im Folgenden auch als "passive Beleuchtungsanordnung" zusammengefasst werden. Eine derartige passive Beleuchtungsanordnung zeichnet sich somit dadurch aus, dass sie selbst keine lichtemittierende Lichtquelle aufweist. In diesem Fall ist dann eine Lichtquelle beispielsweise in dem optischen Sensor selbst angeordnet. Über die erste Schnittstelleneinrichtung hinweg kann dann Licht dieser Lichtquelle beispielsweise in einen Lichtleiter der Beleuchtungsanordnung eingekoppelt werden. Dort wird das Licht mittels der refraktiven, diffraktiven oder holografischen optischen Elemente abgelenkt und/oder mittels mindestens eines reflektierenden optischen Elements reflektiert, so dass sich eine gewünschte Beleuchtungsart einstellt.

In einer weiteren Ausführungsform der Erfindung ist vorgesehen, dass die mindestens eine Beleuchtungsanordnung einen ringförmigen Lichtleiter aufweist.

Ein derartiger ringförmiger Lichtleiter kann beispielsweise bereitgestellt werden, indem die Enden eines Lichtleiterkabels aufgespleißt werden, um sie so über einen ringförmigen Querschnitt gleichmäßig zu verteilen und eine ringförmige Beleuchtung eines Werkstücks bereitzustellen.

Des Weiteren kann in einer Ausführungsform des Beleuchtungsmoduls gemäß dem ersten Aspekt vorgesehen sein, dass das Beleuchtungsmodul mehrere Beleuchtungsanordnungen aufweist, die jeweils mindestens einen Lichtleiter aufweisen.

Entsprechend ist es folglich auch möglich, dass mehrere parallele Beleuchtungskanäle genutzt werden, um das Werkstück wie gewünscht zu beleuchten.

In einer weiteren Ausführungsform kann vorgesehen sein, dass die mindestens eine Beleuchtungsanordnung eine Lichtquelle aufweist.

Es kann somit auch vorgesehen sein, dass die mindestens eine Beleuchtungsanordnung selbst durch eine lichtemittierende Lichtquelle an dem Beleuchtungsmodul gebildet ist. Dabei kann insbesondere vorgesehen sein, dass die mindestens eine Lichtquelle eine LED (light emitting diode) oder eine OLED (organic light emitting diode) ist. Auch der Einsatz von Lasern mit Strahlformungsoptiken oder der Einsatz eines Polarisators in der mindestens einen Beleuchtungsanordnung ist denkbar.

Eine solche Beleuchtungsanordnung, die selbst Licht emittiert bzw. eine Lichtquelle aufweist, kann im Folgenden auch als "aktive Beleuchtungsanordnung" bezeichnet sein.

Selbstverständlich ist es auch möglich, dass ein Beleuchtungsmodul kombiniert sowohl passive als auch aktive Beleuchtungsanordnungen aufweist.

In einer Ausführungsform der Erfindung kann des Weiteren vorgesehen sein, dass die erste Schnittstelleneinrichtung des Beleuchtungsmoduls eine Energieempfangseinrichtung zum Empfangen von Energie, insbesondere von elektrischer Energie, aufweist.

Die Energieempfangseinrichtung kann beispielsweise eine Buchse sein, in die ein Stecker bei einem Kuppeln mit dem optischen Sensor gesteckt wird. Die Energieempfangseinrichtung kann beispielsweise aber auch kontaktlos ausgebildet sein. Beispielsweise kann über die erste Schnittstelleneinrichtung hinweg eine Übertragung von Energie mittels magnetischer Induktion erfolgen. Auf diese Weise ist es möglich, das gekuppelte Beleuchtungsmodul mit Energie zu versorgen, beispielsweise um die zum Betrieb einer Lichtquelle notwendige Energie bereitzustellen.

Auf diese Weise ist es möglich, verschiedene Beleuchtungsarten mittels eines entsprechend ausgestalteten Beleuchtungsmoduls bereitzustellen.

Beispielsweise kann auf diese Weise ein diffuses axiales Licht bereitgestellt werden, bei dem das Licht aus der Kameraachse kommt, so dass keine Schattenbildung und keine Reflektion der Kamera im Objekt erfolgt. Dies kann beispielsweise für reflektierende Oberflächen oder Hohlräume genutzt werden.

Des Weiteren ist es möglich, eine Dunkelfeld-Beleuchtung bereitzustellen, die ein perimetrisches helles Licht bereitstellt, insbesondere um Kanten von Objekten mit hohem Transmissionsgrad hervorzuheben. Ein solches Licht bietet sich beispielsweise für die Erkennung von Oberflächenfehlern und zur Kantendetektion an.

Des Weiteren kann beispielsweise ein diffuses und gleichmäßig verteiltes Licht seitlich auf das Werkstück gestrahlt werden, ein sogenanntes "weiches Auflicht". Abhängig vom Einstrahlwinkel relativ zu der Kameraachse kann ein solches weiches Auflicht beispielsweise dazu benutzt werden, Oberflächenfehler wie Kratzer, Linien oder Unebenheiten zu erkennen.

Mit einem direkten Auflicht, einem sogenannten Hellfeld, kann das Licht unter einem bestimmten Winkel auf das Werkstück projiziert werden. Auf diese Weise können starke Kontraste und Schatten hervorgerufen werden, die die Erkennung von Texturen und Oberflächenstrukturen verbessern können.

Des Weiteren kann auf diese Weise beispielsweise ein direktes Ringlicht bereitgestellt werden, das symmetrische Schattenwürfe erzeugt. Die auf das Werkstück eingestrahlte und von diesem reflektierte Lichtmenge ist dabei hoch, so dass sie sich insbesondere für größere Arbeitsabstände eignet.

Das Ringlicht kann auch diffus ausgebildet sein. Der Einfluss von Oberflächenungenauigkeiten ist dabei verringert, und es eignet sich insbesondere zum Einsatz auf glänzenden Oberflächen.

Beispielsweise kann auf diese Weise auch eine diffuse Kuppelbeleuchtung bereitgestellt werden, um Licht von allen Richtungen auf das Werkstück zu werfen und Schattenbildungen weitgehend zu vermeiden. Insbesondere eignet sie sich beispielsweise im Zusammenhang mit spiegelnden Oberflächen.

Alle diese Beleuchtungsarten unterscheiden sich voneinander zum Teil erheblich, insbesondere zum Beispiel in den Winkeln, in denen das Licht relativ zu einer optischen Achse einer Abbildungsoptik des optischen Sensors auf das Werkstück aufgestrahlt wird. Mittels eines jeweiligen Beleuchtungsmoduls kann so jede Beleuchtungsart für jeden Arbeitsabstand usw., sprich für jeden Anwendungsfall eine maßgeschneiderte Lösung, bereitgestellt werden, die im Betrieb schnell durch eine andere ersetzt werden kann.

In einer weiteren Ausführungsform der Erfindung kann vorgesehen sein, dass der Grundkörper die Form eines kreisförmigen Rings aufweist.

Wie bereits voranstehend ausgeführt wurde, kann die Kreisform des Rings des Grundkörpers Vorteile in Bezug auf die Ausgestaltung der Beleuchtungsanordnung bieten. Beispielsweise kann sie mit einer kreisförmigen Ausgestaltung eines Lichtleiters eine Beleuchtungsanordnung des Beleuchtungsmoduls korrelieren. Insbesondere ermöglicht eine kreisförmige Ausgestaltung des Rings des Grundkörpers in der Regel eine erleichterte Anordnung der Beleuchtungsanordnungen, um eine rotationssymmetrische Beleuchtung zu einer optischen Achse einer Abbildungsoptik des optischen Sensors bereitzustellen.

In einer Ausführungsform der Erfindung kann des Weiteren vorgesehen sein, dass das Beleuchtungsmodul eine zweite Schnittstelleneinrichtung zum werkstückseitigen Koppeln eines Beleuchtungsmoduls mit einem weiteren Beleuchtungsmodul oder einem taktilen Sensor aufweist.

Auf diese Weise wird es beispielsweise möglich, mehrere Beleuchtungsmodule kaskadiert zu verwenden. Beispielsweise ist vorstellbar, dass ein Beleuchtungsmodul, das im Wesentlichen aus einer Streuscheibe besteht, auf ein Beleuchtungsmodul aufzusetzen, das eine gerichtete Beleuchtung bereitstellt. Es wird somit möglich, bestimmte anwendungsbezogene Beleuchtungsarten durch Kopplung mehrerer Beleuchtungsmodule, die jeweils für sich eine "Grundbeleuchtungsart" bereitstellt, zu erreichen. Dies kann die Anzahl der in einem Koordinatenmessgerät vorzuhaltenden Beleuchtungsmodule reduzieren. Die erste Schnittstelleneinrichtung und die zweite Schnittstelleneinrichtung können dabei gleichartig ausgebildet sein, um eine größtmögliche Kompatibilität der einzelnen Beleuchtungsmodule zueinander bereitzustellen. Insbesondere ist dabei darauf zu achten, dass Licht über die Schnittstellen hinweg von einem Beleuchtungsmodul in das andere eingekoppelt werden kann und, soweit notwendig, eine Energieversorgung jedes Beleuchtungsmoduls sichergestellt ist. Des Weiteren kann in einer Ausgestaltung des Beleuchtungsmoduls gemäß dem ersten Aspekt vorgesehen sein, dass das Beleuchtungsmodul eine Tasterschnittstelleneinrichtung aufweist. Diese kann zum werkstückseitigen Koppeln einer Tastspitze mit dem Beleuchtungsmodul vorgesehen sein. Dies kann ermöglichen, ein Messverfahren bereitzustellen, bei dem das Antasten eines Werkstücks mittels einer taktilen Tastspitze optisch erfasst wird.

In einer weiteren Ausführungsform des Beleuchtungsmoduls gemäß dem ersten Aspekt kann vorgesehen sein, dass das Beleuchtungsmodul eine Identifikationseinrichtung zum Identifizieren zumindest eines Typs des Beleuchtungsmoduls aufweist.

Auf diese Weise wird es möglich, dass einem Koordinatenmessgerät bzw. einer Regelungseinrichtung des Koordinatenmessgeräts bekannt ist, welches bzw. welche Beleuchtungsmodule mit dem optischen Sensor gekoppelt sind. Auf diese Weise kann überprüft werden, ob das gewünschte bzw. richtige Beleuchtungsmodul angekoppelt wurde. Auch bei einem manuellen Wechsel kann auf diese Weise unmittelbar festgestellt werden, welches Beleuchtungsmodul angekoppelt wurde. Die Identifikationseinrichtung kann dabei zumindest einen Typ des Beleuchtungsmoduls mitteilen. Sie kann darüber hinaus aber auch weitere Daten des Beleuchtungsmoduls, wie beispielsweise Stand der Energieversorgung, Funktionstüchtigkeit einer oder mehrerer Beleuchtungsanordnungen usw., bereitstellen. Die Identifikationseinrichtung kann als aktive Identifikationseinrichtung, die eine eigene Energieversorgung benötigt, oder aber als passive Identifikationseinrichtung bereitgestellt sein, die keine eigene Energieversorgung benötigt. Beispielsweise kann die Identifikationseinrichtung als Permanentspeicher ausgebildet sein, aus dem die notwendigen Daten des Beleuchtungsmoduls ausgelesen werden können. Die Identifikationseinrichtung kann drahtgebunden oder aber auch drahtlos ausgeführt sein. Beispielsweise kann es sich bei der Identifikationseinrichtung auch um einen RFID-Chip handeln.

In einer Ausführungsform des Koordinatenmessgeräts gemäß dem zweiten Aspekt der Erfindung kann vorgesehen sein, dass das Koordinatenmessgerät eine Regelungseinrichtung aufweist, die dazu ausgebildet ist, ein Aufnehmen und/oder ein Ablegen eines Beleuchtungsmoduls in den mindestens einen Magazinplatz zu regeln.

Auf diese Weise wird besonders einfach eine Möglichkeit bereitgestellt, ein Beleuchtungsmodul automatisch zu wechseln. Sind ein Ort der Halteeinrichtung und des mindestens einen Magazinplatzes bekannt, können entsprechende Bewegungsabläufe in der Regelungseinrichtung hinterlegt werden, die ein Aufnehmen und/oder ein Ablegen eines Beleuchtungsmoduls aus einem bzw. in einen bestimmten Magazinplatz regeln.

In einer weiteren Ausführungsform des Koordinatenmessgeräts gemäß dem zweiten Aspekt der Erfindung kann vorgesehen sein, dass der optische Sensor mittels einer Pinole in einer ersten Richtung relativ zu einer Traverse bewegbar ist, wobei die Pinole in einer zweiten Richtung entlang der Traverse bewegbar ist, wobei die erste Richtung und die zweite Richtung senkrecht zueinander sind, wobei die Halteinrichtung parallel zu der Traverse relativ zu der Traverse festgelegt ist, und der mindestens eine Magazinplatz mittels eines Schlittens relativ zu dem optischen Sensor bewegbar ist

Auf diese Weise wird es möglich, dass bei einem Koordinatenmessgerät, das beispielsweise einen an sich bekannten Portalaufbau aufweist, die Halteeinrichtung relativ nahe an dem optischen Sensor an der Traverse angebracht ist. Mittels eines weiteren Schlittens kann der zumindest eine Magazinplatz dann derart unter den optischen Sensor bewegt werden, dass ein Aufnehmen bzw. Ablegen eines Beleuchtungsmoduls möglich wird. Bei einer derartigen Anordnung sind die Verfahrwege für den optischen Sensor sehr gering, so dass ein schnelles Wechseln eines Beleuchtungsmoduls möglich wird.

In einer weiteren Ausführungsform des Koordinatenmessgeräts gemäß dem zweiten Aspekt der Erfindung kann vorgesehen sein, dass die Halteeinrichtung entlang einer dritten Richtung ausgerichtet ist, wobei die dritte Richtung senkrecht zu der ersten Richtung und senkrecht zu der zweiten Richtung ist, und wobei der optische Sensor und die Halteeinrichtung parallel zu der dritten Richtung relativ zueinander bewegbar sind.

Auf diese Weise wird es möglich, dass die Halteeinrichtungen an anderen Orten des Koordinatenmessgeräts feststehend aufgestellt sind und dann von dem optischen Sensor mittels der Aktuatoren des Maschinengestells des Koordinatenmessgeräts frei angefahren werden.

In einer weiteren Ausführungsform des Koordinatenmessgeräts gemäß dem zweiten Aspekt der Erfindung kann vorgesehen sein, dass das Beleuchtungsmodul eine erste Schnittstelleneinrichtung zumindest zum sensorseitigen Koppeln des Beleuchtungsmoduls in einer definierten Lage mittels eines Permanentmagneten aufweist, wobei das Koordinatenmessgerät des Weiteren einen schaltbaren Elektromagneten zum zumindest teilweisen Neutralisieren eines magnetischen Felds des Permanentmagneten aufweist.

Wie bereits voranstehend ausgeführt wurde, kann mittels zumindest eines Permanentmagneten in dem Beleuchtungsmodul eine besonders zuverlässige Kopplung des Beleuchtungsmoduls mit dem optischen Sensor bereitgestellt werden, da dieser keine Energieversorgung benötigt und des Weiteren leicht mittels einer reinen Transversalbewegung wieder getrennt werden kann. Um die durch die Aktuatoren des Koordinatenmessgeräts aufzuwendende Kraft zum Trennen der Magnetverbindung herabzusetzen, kann darüber hinaus vorgesehen sein, dass insbesondere in dem optischen Sensor ein schaltbarer Elektromagnet vorgesehen ist, der das magnetische Feld des Permanentmagneten wahlweise zumindest teilweise neutralisiert.

In einer weiteren Ausführungsform des Koordinatenmessgeräts gemäß dem zweiten Aspekt ist vorgesehen, dass der mindestens eine Magazinplatz eine Magazinplatzschnittstelle aufweist, die zumindest eine Energieversorgung eines Beleuchtungsmoduls bereitstellt. Auf diese Weise wird ermöglicht, das Beleuchtungsmodul auch in dem Magazinplatz zu betreiben. Dies kann beispielsweise erfolgen, um das Beleuchtungsmodul auf einem konstanten Temperaturniveau mit konstanter Temperaturverteilung zu halten. Durch Schwankungen eines Temperaturniveaus bedingte Kalibrierungen können so vermieden werden. Auch kann vorgesehen sein, ein Beleuchtungsmodul zum Beleuchten eines Messraums des Koordinatenmessgeräts einzusetzen, wenn es in einem Magazinplatz abgelegt ist. Dies kann insbesondere der Fall sein, wenn der Magazinplatz unmittelbar an dem bewegbaren Maschinengestell des Koordinatenmessgeräts angebracht ist, insbesondere an oder parallel zu der Traverse eines Portalaufbaus.

In einer Ausführungsform des Verfahrens gemäß dem dritten Aspekt der Erfindung kann vorgesehen sein, dass die Halteeinrichtung mindestens den ersten Magazinplatz und einen zweiten Magazinplatz aufweist, wobei der optische Sensor zu Beginn des Verfahrens zumindest mittelbar mit einem zweiten Beleuchtungsmodul gekoppelt ist, und wobei zunächst die folgenden Schritte ausgeführt werden:
- Bewegen des mit dem optischen Sensor zumindest mittelbar gekoppelten zweiten Beleuchtungsmoduls in den zweiten Magazinplatz,
- Ausführen einer translatorischen und/oder rotatorischen relativen Bewegung zwischen dem optischen Sensor und dem zweiten Beleuchtungsmodul zum Entkoppeln des optischen Sensors von dem zweiten Beleuchtungsmodul.

Auf diese Weise kann mittels eines einfachen Bewegungsablaufs auch zunächst ein Beleuchtungsmodul abgelegt werden. Insbesondere kann es sich bei der relativen Bewegung zwischen dem optischen Sensor und dem ersten Beleuchtungsmodul um eine rein translatorische Bewegung handeln. Werden diese Schritte voranstehend an das Verfahren gemäß dem dritten Aspekt der Erfindung ausgeführt, wird auf diese Weise ein einfaches Wechseln eines Beleuchtungsmoduls möglich, wobei das Wechseln lediglich mittels einfach regelbarer Transversalbewegungen erfolgen kann. Alternativ ist auch denkbar, dass eine Bewegungsrichtung bei einem Ablegen eines Beleuchtungsmoduls vertikal ist. Zum Beispiel kann ein Beleuchtungsmodul auch von oben in einer Art Gabel abgelegt werden. Gerade bei baulich längeren Beleuchtungsmodulen kann so erreicht werden, dass der überwiegende Teil des Beleuchtungsmoduls außerhalb eines Messvolumens angeordnet ist und so der auf dem Koordinatenmessgerät nutzbare Platz optimiert wird.

In einer weiteren Ausführungsform des Verfahrens gemäß dem dritten Aspekt der Erfindung kann vorgesehen sein, dass der optische Sensor zu Beginn des Verfahrens zumindest mittelbar mit einem zweiten Beleuchtungsmodul gekoppelt ist, und wobei das Verfahren ausgeführt wird, um das erste Beleuchtungsmodul mit dem zweiten Beleuchtungsmodul zu koppeln. Auf diese Weise wird es möglich, mehrere Beleuchtungsmodule kaskadenartig zu koppeln und durch Kombination ihrer Beleuchtungsmodule eine bestimmte Beleuchtung des Werkstücks bereitzustellen.

Dies ermöglicht insbesondere auch, die Anzahl der in dem Koordinatenmessgerät vorzuhaltenden einzelnen Beleuchtungsmodule zu minimieren. In einer weiteren Ausführungsform kann vorgesehen sein, dass eine Trennhilfselement vorgesehen ist. Ein solches Trennhilfselement kann sicherstellen, dass bei einer kaskadenartigen Kopplung mit einem ersten und einem zweiten Beleuchtungsmodul eine Trennung an einem Magazinplatz an der richtigen Stelle, bspw. zwischen dem ersten und dem zweiten Beleuchtungsmodul erfolgt. Bei dem Trennhilfselement kann es sich beispielsweise um einen Elektromagneten handeln, der eine magnetische Haltekraft an einer gewünschten Stelle neutralisiert. Es kann beispielsweise auch ein mechanisches Trennhilfselement vorgesehen sein, das insbesondere an dem Magazinplatz angeordnet sein kann. Beispielsweise kann ein Blechelement derart angeordnet sein, dass es während eines Einfahrens in den Magazinplatz in eine Wechselschnittstelle geführt wird und eine magnetische Haltekraft abschirmt. Die zumindest teilweise Reduktion der Haltekraft kann somit auch passiv erfolgen, wenn in dem Magazinplatz ein geeignetes dünnes Teil bzw. Blech zwischen Magnet und dessen Gegenseite z.B. während der Einfahrbewegung eingefügt wird. Das dünne Teil kann z.B. aus µMetall gefertigt sein, was zu einer starken Abschirmung der magnetischen Feldlinien und damit der Haltekraft führt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Die Erfindung ist in den Ansprüchen 1 bis 14 definiert.

Ausführungsformen der Erfindung sind in der Zeichnung dargestellt und werden in der nachfolgenden Beschreibung näher erläutert. Es zeigen:
- Fig. 1: eine Ausführungsform eines erfindungsgemäßen Koordinatenmessgeräts,
- Fig. 2: eine Detailansicht eines mit einem erfindungsgemäßen Beleuchtungsmodul ausgestatteten optischen Sensors eines Koordinatenmessgeräts,
- Fig. 3: eine schematische Ansicht eines mit einem optischen Sensor gekoppelten Beleuchtungsmoduls,
- Fig. 4: eine schematische Querschnittsansicht entlang einer Linie IV-IV in Fig. 3,
- Fig. 5a bis 5c: verschiedene Ausführungsformen eines erfindungsgemäßen Beleuchtungsmoduls,
- Fig. 6: eine Ausführungsform einer Kaskadenkopplung mehrerer erfindungsgemäßer Beleuchtungsmodule,
- Fig. 7: eine schematische Detailansicht im Bereich einer Halteeinrichtung in einem erfindungsgemäßen Koordinatenmessgerät, und
- Fig. 8: ein schematisches Ablaufdiagramm eines erfindungsgemäßen Verfahrens.

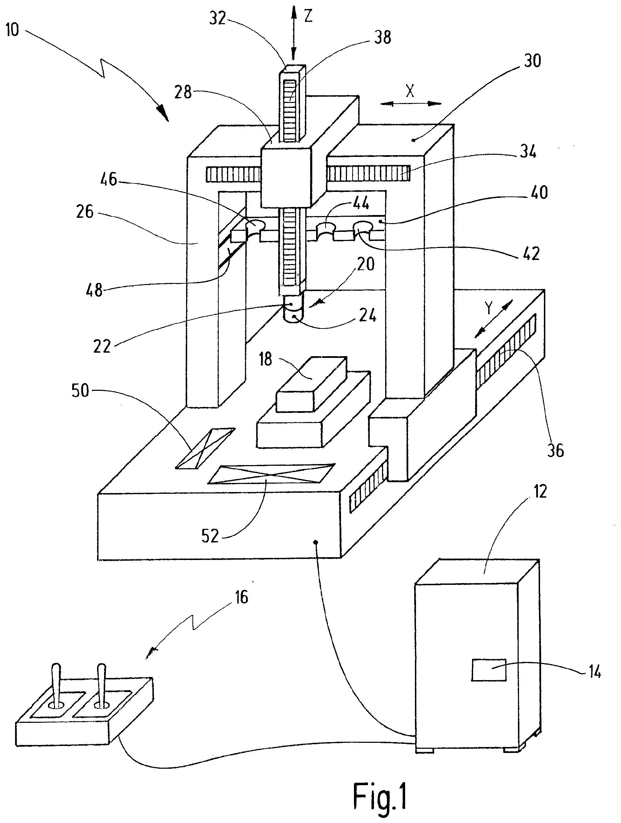

Fig. 1 zeigt eine Ausführungsform eines Koordinatenmessgeräts 10. Das Koordinatenmessgerät 10 weist eine Regelungseinrichtung 12 auf, die dazu ausgebildet ist, das Koordinatenmessgerät 10 automatisiert zu steuern. Hierzu kann die Regelungseinrichtung 12 eine Datenverarbeitungseinheit 14 aufweisen. Des Weiteren kann die Regelungseinrichtung 12 auch Anzeigevorrichtungen aufweisen, die einem Nutzer des Koordinatenmessgeräts 10 Informationen über angewählte Betriebsmodi, Messergebnisse usw. anzeigen. Des Weiteren weist das Koordinatenmessgerät 10 eine Bedienungseinrichtung 16 auf, die einem Nutzer ermöglicht, das Koordinatenmessgerät 10 zu steuern. Die Bedienungseinrichtung 16 ist dabei lediglich schematisch dargestellt. Dies soll zum einen ein manuelles Bewegen des Koordinatenmessgeräts 10 ermöglichen. Des Weiteren kann die Bedienungseinrichtung 16 dazu ausgebildet sein, dass der Nutzer Systemeingaben in die Regelungseinrichtung 12 eingeben kann, um einen Betriebsmodus usw. auszuwählen. Die Regelungseinrichtung 12 kann das Koordinatenmessgerät 10 des Weiteren auch automatisch regeln.

Das Koordinatenmessgerät 10 dient dazu, ein Werkstück 18 zu vermessen. Hierzu weist das Koordinatenmessgerät 10 einen optischen Sensorkopf 20 auf, der einen optischen Sensor 22 und ein Beleuchtungsmodul 24 aufweist. Das Beleuchtungsmodul 24 ist mit dem optischen Sensor 22 gekoppelt.

Um den optischen Sensorkopf 20 relativ zu dem Werkstück 18 bewegen zu können, weist das Koordinatenmessgerät in der dargestellten Ausführungsform ein Portal 26 auf, das in einer Y-Richtung bewegbar ist. Ein Schlitten 28 ist in einer X-Richtung bewegbar an einer Traverse 30 des Portals 26 gelagert. Auf diese Weise kann der optische Sensorkopf 20 durch Bewegung des Schlittens 28 auf der Traverse 30 in X-Richtung bewegt werden. In dem Schlitten 28 ist eine Pinole 32 vorgesehen, die relativ zu dem Schlitten 28 in einer Z-Richtung bewegbar ist. An der Pinole 32 ist dann der optische Sensorkopf 20 angebracht. Auf diese Weise ist es möglich, den optischen Sensorkopf 20 in allen drei Raumrichtungen X, Y und Z zu bewegen. Eine Lagerung des Portals 26 des Schlittens 28 und der Pinole 32 zueinander kann beispielsweise mittels sogenannter Luftlager ausgeführt sein. Um eine Lage des Portals 26, des Schlittens 28 und der Pinole 32 zu erfassen, kann das Koordinatenmessgerät 10 Skalen aufweisen. Beispielsweise können eine Skala 34 für die X-Richtung, eine Skala 36 für die Y-Richtung und eine Skala 38 für die Z-Richtung vorgesehen sein.

Des Weiteren kann das Koordinatenmessgerät 10 eine Halteeinrichtung 40 aufweisen. In der Halteeinrichtung 40 ist mindestens ein Magazinplatz vorgesehen, insbesondere sind mehrere Magazinplätze vorgesehen. Dargestellt sind ein erster Magazinplatz 42, ein zweiter Magazinplatz 44 und ein dritter Magazinplatz 46. Jeder der Magazinplätze 42, 44, 46 kann dazu vorgesehen sein, ein bestimmtes Beleuchtungsmodul 24 zu tragen. Ein Wechseln eines Beleuchtungsmoduls 24 kann dann beispielsweise derart automatisiert erfolgen, dass die Regelungseinrichtung 12 ein momentan gekoppeltes Beleuchtungsmodul 24 in einem der Magazinplätze 42, 44, 46 ablegt und ein weiteres Beleuchtungsmodul (nicht dargestellt) aus einem anderen der Magazinplätze 42, 44, 46 aufnimmt.

In der dargestellten Ausführungsform ist die Halteeinrichtung 40 an dem Portal 26 angebracht, so dass sich die Halteeinrichtung 40 unterhalb der Traverse 30 parallel zu der Traverse 30 in X-Richtung erstreckt. Alternativ kann beispielsweise auch vorgesehen sein, dass die Halteeinrichtung 40 direkt an der Traverse 30 angebracht ist. Durch eine entsprechende Anordnung der Halteeinrichtung 40 können Verfahrwege zum Wechseln eines Beleuchtungsmoduls 24 besonders kurz gehalten werden. Wie jedoch aus der dargestellten Ansicht ersichtlich ist, besteht in der dargestellten Anordnung zunächst keinerlei Möglichkeit, den optischen Sensor 22 und die Halteeinrichtung 40 in Y-Richtung relativ zueinander zu verfahren. Daher ist die Halteeinrichtung 40 in der dargestellten Ausführungsform auf einem Schlitten 48 in dem Portal 26 gelagert, so dass ein relatives Bewegen der Halteeinrichtung 40 zu dem optischen Sensor 22 in Y-Richtung möglich wird. Dabei wird die Halteeinrichtung 40 in Y-Richtung relativ zu dem Portal 26 des Schlittens 48 bewegt.

Selbstverständlich sind darüber hinaus alternative Anordnungen der Halteeinrichtung 40 denkbar. Beispielsweise ist es möglich, dass an schematisch angedeuteten Aufstellungsorten 50, 52 die Halteeinrichtung 40 positioniert wird. Sie steht dann frei in dem Koordinatenmessgerät 10. Die Magazinplätze 42, 44, 46 können dann frei von dem optischen Sensor 22 angefahren werden, um ein Beleuchtungsmodul 24 abzulegen oder aufzunehmen.

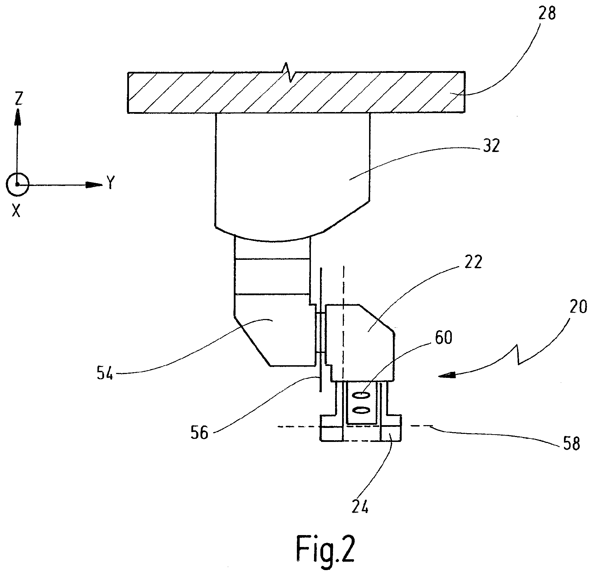

Fig. 2 zeigt eine schematische Detailansicht eines Teils des Koordinatenmessgeräts 10. Schematisch sind erneut der Schlitten 28 und die Pinole 32 dargestellt. Wie Fig. 2 zu entnehmen ist, kann an der Pinole 32 beispielsweise eine sogenannte Drehschwenkeinheit 54 angeordnet sein, die ein Drehen des optischen Sensors 22 sowohl um die Z-Richtung als auch die Y-Richtung ermöglicht. Auf diese Weise kann der optische Sensor 22 in einer Vielzahl von Richtungen ausgerichtet werden, um das Werkstück 18 aus einem gewünschten Betrachtungswinkel zu betrachten. Verschiedene Systemkomponenten sind dabei über Wechselflächen 56 gekoppelt, beispielsweise ist mittels einer Wechselfläche 56 der optische Sensor 22 mit der Drehschwenkeinheit 54 gekoppelt. Über die Wechselfläche 56 hinweg werden elektrische Versorgungsleitungen, Kommunikationsschnittstellen, optische Schnittstellen usw. bereitgestellt, um den optischen Sensor 22 zum einen mit Energie zu versorgen und zum anderen das Werkstück 18 anstrahlen zu können. Des Weiteren werden die von dem optischen Sensor 22 erfassten Daten über die Wechselfläche 56 und die dort bereitgestellten Schnittstellen hinweg zu der Regelungseinrichtung 12 und ihrer Datenverarbeitungseinheit 14 geleitet.

An dem optischen Sensor 22 ist entlang einer ersten Schnittstelleneinrichtung 58 das Beleuchtungsmodul 24 gekoppelt. Das Beleuchtungsmodul 24 weist in der dargestellten Ausführungsform die Form eines kreisförmigen Rings auf. Darüber hinaus weist der optische Sensor 22 noch eine Abbildungsoptik 60 auf, die dazu dient, von einem Werkstück 18 empfangene Lichtstrahlung auf den optischen Sensor 22 abzubilden.

Die Ausgestaltung des Beleuchtungsmoduls 24 wird im Folgenden im Hinblick auf die weiteren Figuren erläutert.

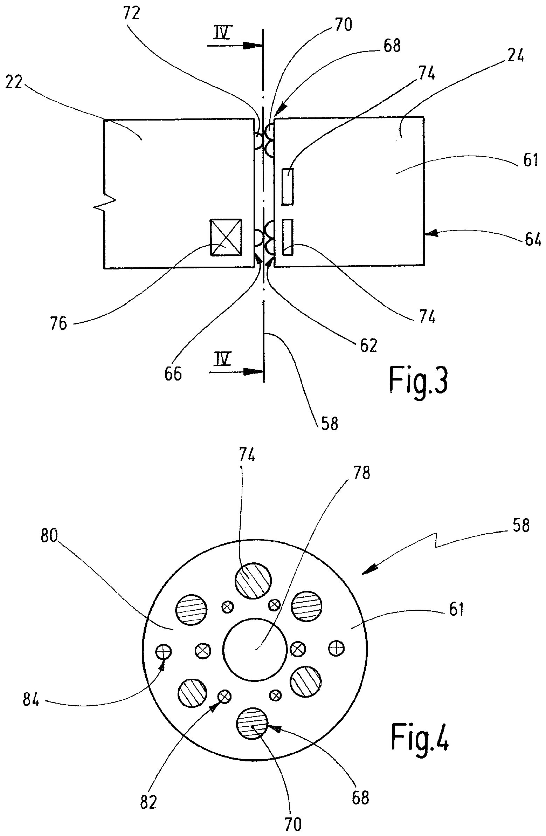

In Fig. 3 ist schematisch das Beleuchtungsmodul 24 dargestellt, das mit dem optischen Sensor 22 gekoppelt ist.

Das Beleuchtungsmodul 24 weist einen Grundkörper 61 auf. Der Grundkörper 61 wiederum weist eine Sensorseite 62 auf, die dem optischen Sensor 22 zugewandt ist. Gegenüberliegend zu der Sensorseite 62 weist der Grundkörper 61 eine Werkstückseite 64 auf, die im Betrieb dem Werkstück 18 zugewandt ist.

Der Sensorseite 62 des Grundkörpers 61 liegt im gekoppelten Zustand eine Kopplungsseite 66 des Sensors 22 gegenüber.

Zum Koppeln der Kopplungsseite 66 des optischen Sensors 22 und der Sensorseite 62 des Grundkörpers 61 ist eine Dreipunktlagerung 68 vorgesehen. Eine solche Dreipunktlagerung ist dem Durchschnittsfachmann grundsätzlich bekannt und dient dazu, das Beleuchtungsmodul 24 in eindeutiger Lage mit dem optischen Sensor 62 zu koppeln. Hierzu sind Dreipunktlagerelemente 68 an der Sensorseite 62 des Beleuchtungsmoduls 24 und Dreipunktlagerelemente 72 an der Kopplungsseite 66 des optischen Sensors 22 vorgesehen. Beispielsweise kann vorgesehen sein, dass eine Dreipunktlagerung erfolgt. Dabei ist beispielsweise eine Lagerung über Kugelpaare, Kugel-Walzen¬paare oder eine Lagerung in Senkung für die erste Kugel, eine Lagerung in einer V-Nut für die zweite Kugel und eine Lagerung auf einer Fläche für die dritte Kugel vorgesehen.

Um eine notwendige Haltekraft aufzubringen, die das Beleuchtungsmodul 24 und den optischen Sensor 22 zusammenhält, kann vorgesehen sein, dass in dem Grundkörper 61 ein Permanentmagnet 74 vorgesehen ist. Der Permanentmagnet 74 ist dabei derart angeordnet, dass sich die Magnetfeldlinien über die erste Schnittstelleneinrichtung 58 hinweg durch den optischen Sensor 22 erstrecken, so dass eine geeignete Haltekraft zwischen dem Beleuchtungsmodul 24 und dem optischen Sensor 22 bereitgestellt ist. Natürlich müssen sich die Magnetfeldlinien dabei durch einen ferromagnetischen Werkstoff in dem optischen Sensor 22 erstrecken. Auch kann ein weiterer Permanentmagnet oder ein Elektromagnet (nicht dargestellt) in dem optischen Sensor vorhanden sein, um zusammen mit dem Permanentmagneten 74 die erforderliche Haltekraft aufzubringen. Selbstverständlich kann darüber hinaus auch vorgesehen sein, dass zusätzliche Permanentmagneten sowohl in dem Beleuchtungsmodul 24 und/oder in dem optischen Sensor 22 vorgesehen sind. Selbstverständlich kann auch vorgesehen sein, dass der Permanentmagnet 74 nur in dem optischen Sensor 22 vorgesehen ist.

Des Weiteren kann vorgesehen sein, dass der optische Sensor 22 einen Elektromagneten 76 aufweist, der schaltbar ist. Dieser ist dabei derart ausgestaltet, dass er ein von dem Permanentmagnet 74 aufgebrachtes Magnetfeld zumindest teilweise neutralisiert, so dass das Beleuchtungsmodul 24 einfacher von dem optischen Sensor 22 getrennt werden kann. Selbstverständlich kann auch vorgesehen sein, dass einer oder mehrere Elektromagneten in dem Beleuchtungsmodul 24 angeordnet sind. Um die Notwendigkeit einer Energieversorgung des Beleuchtungsmoduls 24 zu vermeiden, wird der Elektromagnet in der Regel in dem optischen Sensor 22 vorgesehen sein.

Des Weiteren kann als Beleuchtungsmodul 24 aber auch eine Energieempfangseinrichtung 77 vorgesehen sein, die entweder drahtlos oder drahtgebunden über die erste Schnittstelleneinrichtung 58 hinweg mit dem optischen Sensor 22 derart gekoppelt ist, dass das Beleuchtungsmodul 24 mit einer Energieversorgung versehen ist.

Fig. 4 zeigt eine Querschnittsansicht entlang einer Linie IV-IV in Fig. 3.

Wie in dem Querschnitt in Fig. 4 zu erkennen ist, weist der Grundkörper 61 die Form eines kreisförmigen Rings auf. Mit anderen Worten hat der Grundkörper 61 im Wesentlichen die Form eines Zylinders mit einer zentralen Aussparung. Insofern weist der Grundkörper 61 des Beleuchtungsmoduls 24 einen freien Zentralbereich 78 auf, der die Aussparung bildet. Des Weiteren weist der Grundkörper 61 einen Randbereich 80 auf. Der Randbereich 80 weist dann die erste Schnittstelleneinrichtung 58 mit in der dargestellten Ausführungsform beispielsweise drei Permanentmagneten 74, sowie weiteren optischen Schnittstellen 82, um Licht von der optischen Sensor 22 in das Beleuchtungsmodul 24 zu leiten, und elektrischen Schnittstellen 84 zur Energieversorgung des Beleuchtungsmoduls 24 auf.

Selbstverständlich ist die in Fig. 4 dargestellte Ausführungsform lediglich beispielhaft zu verstehen. Beispielsweise kann auch ein lediglich passive Beleuchtungsanordnungen aufweisendes Beleuchtungsmodul 24 keinerlei elektrische Schnittstellen 84 in dem Randbereich 80 aufweisen. Darüber hinaus ist es möglich, dass ein lediglich aktive Beleuchtungsanordnungen aufweisendes Beleuchtungsmodul 24 keinerlei optische Schnittstellen 82 in dem Randbereich 80 aufweist.

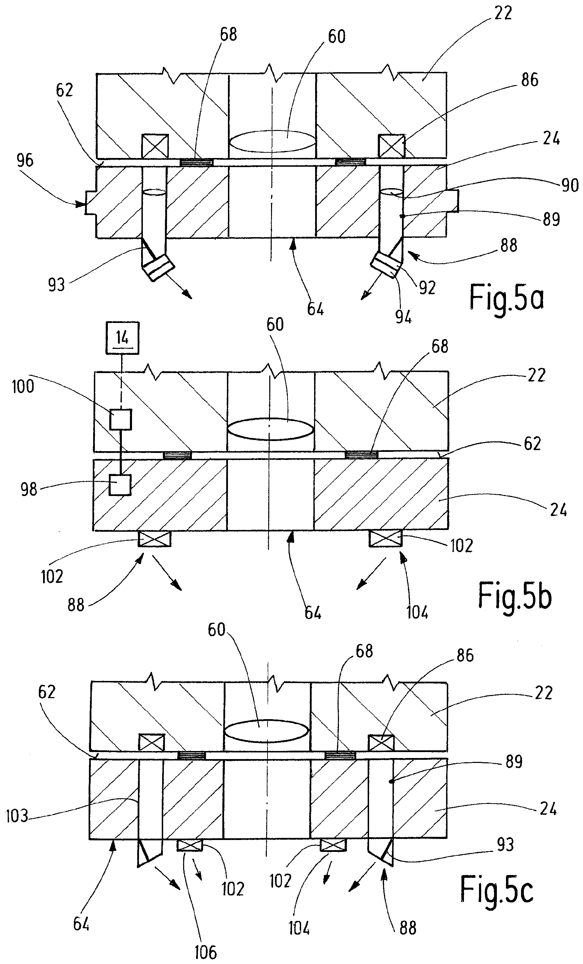

In Fig. 5a ist eine erste Ausführungsform eines Beleuchtungsmoduls 24 beispielhaft dargestellt. Gleiche Elemente sind mit gleichen Bezugszeichen gekennzeichnet und werden im Folgenden nicht erneut erläutert.

In der dargestellten Ausführungsform weist der optische Sensor 22 zumindest eine Lichtquelle 86 auf. In der dargestellten Ausführungsform ist die Lichtquelle 86 beispielsweise ringförmig ausgebildet, d.h. sie weist ein ringförmiges, Licht emittierendes Element auf. Die Lichtquelle 86 kann aber beispielsweise auch als eine Mehrzahl von punktförmigen Lichtquellen, beispielsweise LEDs oder OLEDs oder Laser, ausgebildet sein, die ringförmig angeordnet sind.

Das Beleuchtungsmodul 24 weist eine Beleuchtungsanordnung 88 auf. Die Beleuchtungsanordnung 88 ist lediglich passiv ausgebildet. Die Beleuchtungsanordnung 88 weist daher einen ringförmigen Lichtleiter 89 auf und kann darüber hinaus refraktive optische Elemente 90, diffraktive optische Elemente 92, reflektierende optische Elemente 93 und/oder holografische optische Elemente 94 aufweisen. Dies muss jedoch nicht der Fall sein. Beliebige Kombinationen derartiger optischer Elemente sind denkbar, um eine gewünschte Beleuchtung mittels der Beleuchtungsanordnung 24 bereitzustellen. Das von der Lichtquelle 86 emittierte Licht wird in den Lichtleiter 89 eingekoppelt, durch das Beleuchtungsmodul 24 geleitet und auf gewünschte Weise abgelenkt, so dass letztendlich eine geeignete Beleuchtung des Werkstücks 18 mittels des Beleuchtungsmoduls 24 bereitgestellt ist. Darüber hinaus weist das Beleuchtungsmodul 24 eine Wechselschnittstelleneinrichtung 96 auf, die in der dargestellten Ausführungsform als umlaufender Vorsprung ausgebildet ist. Der umlaufende Vorsprung kann dann beispielsweise mit einer umlaufenden Nut in einem Magazinplatz 42, 44, 46 der Halteeinrichtung 40 zusammenwirken, so dass beispielsweise dann das Beleuchtungsmodul 24 in einen solchen Magazinplatz eingeschoben werden kann.

In der Fig. 5b ist eine weitere Ausführungsform eines Beleuchtungsmoduls 24 dargestellt. Gleiche Elemente sind erneut mit gleichen Bezugszeichen gekennzeichnet. Es wird daher nur auf die Unterschiede eingegangen.

Das Beleuchtungsmodul 24 weist eine Identifikationseinrichtung 98 auf, die von einer Identifikationsleseeinrichtung 100 ausgelesen werden kann. Das Auslesen kann dabei drahtgebunden oder aber drahtlos erfolgen. Die Identifikationsleseeinrichtung 100 kann in dem optischen Sensor 22 angeordnet sein. Sie kann aber auch in jedem anderen Element des Koordinatenmessgeräts 10 angeordnet sein. Sie kann auch direkt Teil der Regelungseinrichtung 12 bzw. der Datenverarbeitungseinheit 14 sein. Auf diese Weise ist es möglich, das Beleuchtungsmodul 24 eindeutig zu identifizieren und diese Information der Regelungseinrichtung 12 bereitzustellen. Dies dient zum einen dazu, das gekoppelte Beleuchtungsmodul 24 und dessen Beleuchtungsart bzw. -arten zu identifizieren, zum anderen können beispielsweise auch Dimensionen des Beleuchtungsmoduls 24 in der Identifikationseinrichtung 98 hinterlegt sein und ausgelesen werden, um auf diese Weise ein kollisionsfreies Regeln einer Bewegung des mit dem Beleuchtungsmodul 24 gekoppelten optischen Sensors 22 zu ermöglichen.

In der dargestellten Ausführungsform ist das Beleuchtungsmodul 24 als sogenanntes aktives Beleuchtungsmodul ausgestaltet. Es weist zwei Lichtquellen 102 auf. Jede Lichtquelle 102 bildet eine Beleuchtungsanordnung aus, so dass das Beleuchtungsmodul 24 in Fig. 5b zwei Beleuchtungsanordnungen 88, 104 aufweist.

Insbesondere kann die Lichtquelle 102 in energiesparender LED/OLED-Technik ausgeführt sein. Auch ein Laser ist als Lichtquelle 102 möglich. Die Lichtquellen 102 können zum Beispiel in Gruppen, getrennt nach Farben, in einem Dauerstrich- oder in einem Pulsbetrieb genutzt werden. Wenn viele unterschiedliche Lichtquellen genutzt werden sollen, so ist es vorteilhaft, eine Steuerungseinrichtung direkt in dem Beleuchtungsmodul 24 vorzusehen. Entsprechend ist über die erste Schnittstelleneinrichtung 58 eine elektrische Schnittstelle zur Versorgung einer solchen Steuerungseinrichtung mit Energie und Steuersignalen vorzusehen. Die Versorgung mit elektrischer Energie kann dabei drahtlos oder drahtgebunden ausgeführt sein. Insbesondere kann des Weiteren vorgesehen sein, dass eine Energieversorgung für eine Steuerungseinrichtung und eine Energieversorgung für die Lichtquellen 102 getrennt voneinander ausgeführt sind.

In Fig. 5c ist noch eine weitere Ausführungsform eines Beleuchtungsmoduls 24 dargestellt. Das Beleuchtungsmodul 24 in der Fig. 5c weist kombiniert sowohl aktive als auch passive Beleuchtungsanordnungen 88, 104 und 106 auf. Im dargestellten Beispiel ist etwa die Beleuchtungsanordnung 88 ein kreisförmiges Ringlicht, das lediglich mittels zweier Lichtleiter 89, 103 und reflektierender optischer Elemente 93 Licht, das von einer Lichtquelle 86 des optischen Sensors 22 emittiert wird, durch das Beleuchtungsmodul 24 leitet und wie gewünscht auf das Werkstück 18 reflektiert. Darüber hinaus sind unterstützend zwei Beleuchtungsanordnungen 104 und 106 vorgesehen, die jeweils als aktiv Licht emittierenden Lichtquellen 102 bereitgestellt sind.

Das erfindungsgemäße Beleuchtungsmodul 24 kann somit entweder passive Beleuchtungsanordnungen 88, 104, 106, aktive Beleuchtungsanordnungen 88, 104, 106 oder sowohl aktive als auch passive Beleuchtungsanordnungen 88, 104, 106 aufweisen.

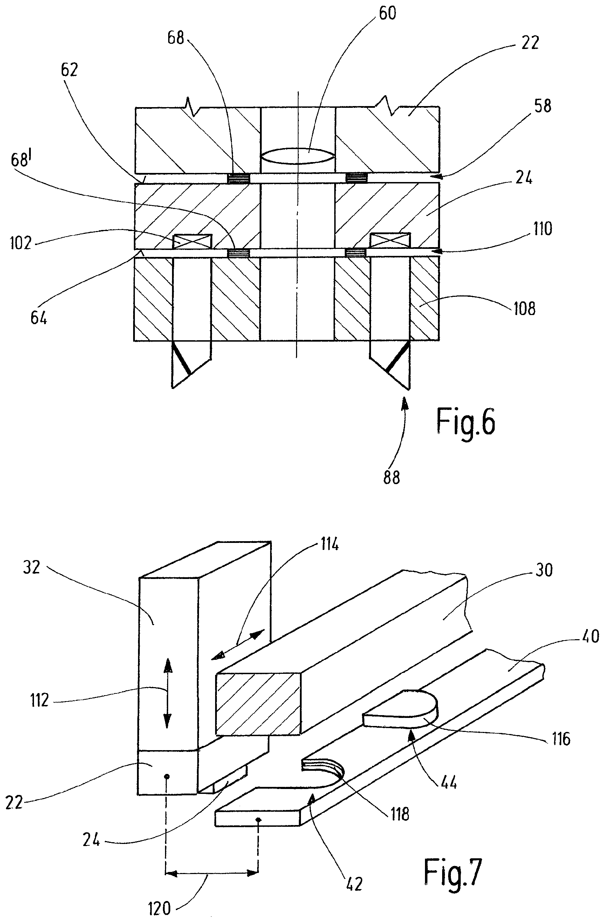

In der Fig. 6 ist noch eine weitere Ausführungsform eines Beleuchtungsmoduls 24 dargestellt. Das dort dargestellte Beleuchtungsmodul 24 weist sowohl auf der Sensorseite 62 eine erste Schnittstellenanordnung 58 auf, die das Beleuchtungsmodul 24 mit dem optischen Sensor 22 koppelt. Das Beleuchtungsmodul 24 weist darüber hinaus auf seiner Werkstückseite 64 eine zweite Schnittstellenanordnung 110 auf, die zum Ankoppeln eines zweiten Beleuchtungsmoduls 108 an das Beleuchtungsmodul 24 dient. Die zweite Schnittstelleneinrichtung 110 kann dabei wie die erste Schnittstelleneinrichtung 58 ausgebildet sein, um eine möglichst volle Kompatibilität der Beleuchtungsmodule 24, 108 hinsichtlich ihrer Kopplung miteinander und mit dem optischen Sensor 22 zu ermöglichen. Dies muss jedoch nicht zwingend der Fall sein. Es kann auch vorgesehen sein, dass die zweite Schnittstelleneinrichtung 110 eine andere Ausgestaltung als die Schnittstelleneinrichtung 58 aufweist. Des Weiteren kann vorgesehen sein, dass eine Identifikationseinrichtung 98 sowohl in dem Beleuchtungsmodul 24 als auch in dem zweiten Beleuchtungsmodul 108 angeordnet ist, so dass die Identifikationsleseeinrichtung 100 die gesamte Anordnung dann kennt. Diese kann dann bei Kollisionsbetrachtungen und für die optimale Funktionalität berücksichtigen werden.

Mittels dieser kaskadenartigen Kopplung mehrerer Beleuchtungsmodule 24, 108 kann insbesondere die insgesamt in einem Koordinatenmessgerät 10 vorgesehene Anzahl von Beleuchtungsmodulen 24, 108 minimiert werden. Insbesondere kann beispielsweise vorgesehen sein, dass eine Kopplung zweier Beleuchtungsmodule 24, 108 eine Beleuchtungsart bereitstellt, für die ansonsten ein separates Beleuchtungsmodul vorzusehen gewesen wäre. So wird eine besonders große Flexibilität beim Einsatz der Beleuchtungsmodule 24, 108 bereitgestellt.

In Fig. 7 ist schematisch ein Ausschnitt des Koordinatenmessgeräts 10 dargestellt, der Verfahrbewegungen zum Wechseln der Beleuchtungsmodule 24 aufweist. Die Elemente sind dabei lediglich schematisch angedeutet und mit denselben Bezugszeichen wie in den übrigen Figuren gekennzeichnet.

Die Pinole 32 ist in der dargestellten Ausführungsform an der Traverse 30 angelenkt und relativ zu dieser in Z-Richtung 112 und in X-Richtung 114 bewegbar.

Schematisch ist des Weiteren dargestellt, dass an einem ersten Magazinplatz 42 die Halteeinrichtung 40 eine umlaufende Nut 118 aufweist, in die beispielsweise eine Wechselschnittstelleneinrichtung 96, wie sie in der Fig. 5a dargestellt ist, eingreifen kann. In dem zweiten Magazinplatz 44 ist ein weiteres Beleuchtungsmodul 116 angeordnet. Ein bereits an den optischen Sensor 22 angekoppeltes Beleuchtungsmodul 24 kann durch Bewegung der Pinole 32 relativ zu der Traverse 30 in die Richtung 112, 114 in eine Position gebracht werden, in der lediglich nur noch eine transversale Bewegung 120 der Pinole 32 und der Halteeinrichtung 40 relativ zueinander zu erfolgen hat, um das Beleuchtungsmodul 24 beispielsweise in den Magazinplatz 42 einzufahren. Die relative Bewegung kann entweder dadurch ausgeführt werden, dass die Halteeinrichtung 40 beispielsweise mittels des Schlittens 48 relativ zu der Pinole 32 bewegt wird. Wenn die Halteeinrichtung 40 aber beispielsweise an einem Aufstellort 50, 52 vorgesehen ist, kann dies auch durch eine entsprechende Bewegung des optischen Sensors 22 erfolgen, während die Halteeinrichtung 40 feststeht.

Das Beleuchtungsmodul 24 befindet sich dann in dem Magazinplatz 42, wobei die Wechselschnittstelleneinrichtung 96 mit der Nut 118 ineinandergreift. Durch Bewegen der Pinole 32 in der Z-Richtung 112 kann dann eine geeignete große Kraft aufgebracht werden, so dass die Haltekraft von den Permanentmagneten 74 überwunden wird und so das Beleuchtungsmodul 24 von dem optischen Sensor 22 "abreißt". Dabei kann des Weiteren auch vorgesehen sein, dass ein beispielsweise vorgesehener schaltbarer Elektromagnet 76 geschaltet wird, der eine Haltekraft des Permanentmagneten 74 zumindest teilweise neutralisiert.

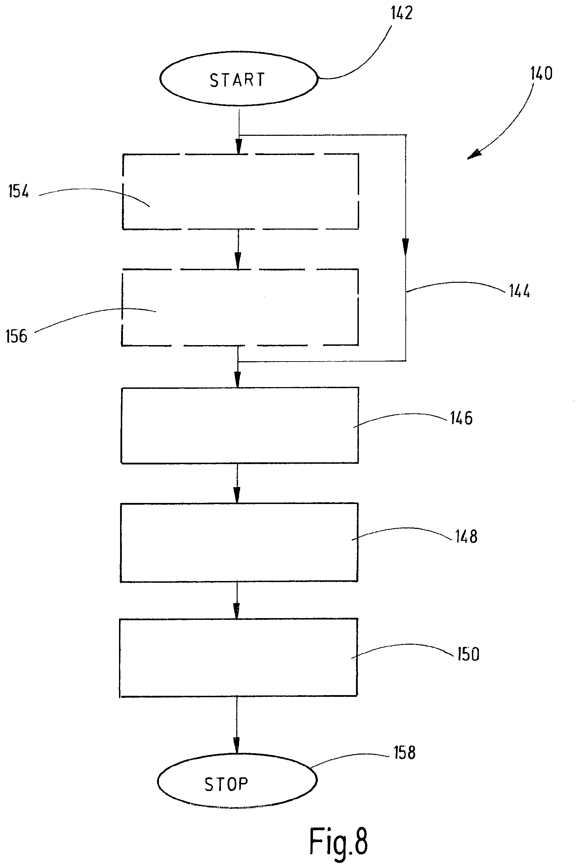

In der Fig. 8 ist schematisch ein Ablaufdiagramm eines Verfahrens 140 zum Aufnehmen eines Beleuchtungsmoduls 24 dargestellt.

Das Verfahren beginnt in einem Startschritt 142 und setzt sich dann zunächst entlang eines Abzweigs 144 in einem Schritt 146 fort. In dem Schritt 146 findet ein Bewegen des optischen Sensors 22 des Koordinatenmessgeräts 10 und des ein Beleuchtungsmodul aufweisenden ersten Magazinplatzes 42 relativ zueinander in eine erste Position statt. In dieser ersten Position sind, wie voranstehend ausgeführt wurde, der optische Sensor 22 und das erste Beleuchtungsmodul 24 mittels mindestens einer translatorischen Bewegung relativ zueinander zumindest mittelbar, insbesondere unmittelbar, koppelbar.

Mit anderen Worten sind der optische Sensor 22 und das Beleuchtungsmodul 24 in der ersten Position derart relativ zueinander angeordnet, dass die Sensorseite 62 des Beleuchtungsmoduls 24 und die Kopplungsseite 66 des optischen Sensors 22 einander parallel gegenüberliegen.

In einem Schritt 148 wird dann eine rein translatorische Relativbewegung zwischen dem optischen Sensor 22 und dem ersten Beleuchtungsmodul 24 ausgeführt und so der optische Sensor 22 mit dem Beleuchtungsmodul 24 zumindest mittelbar gekoppelt. Unter "zumindest mittelbar" ist dabei zu verstehen, dass das Beleuchtungsmodul 24 entweder direkt mit dem optischen Sensor 22 gekoppelt wird, oder aber sich zwischen dem optischen Sensor 22 und dem Beleuchtungsmodul 24 auch noch ein oder mehrere weitere Beleuchtungsmodule 108 befinden können.

In einem Schritt 150 erfolgt dann ein Bewegen des optischen Sensors mit dem zumindest mittelbar gekoppelten Beleuchtungsmodul 24 aus dem ersten Magazinplatz 42. In der in Fig. 7 dargestellten Ausführungsform wird dies eine transversale Bewegung 120 sein. Ist zum Halten des Beleuchtungsmoduls 24 in dem Magazinplatz 42, 44, 46 eine Verbindung nach Art der Wechselschnittstelleneinrichtung 96 und der Nut 118 vorgesehen, so wird sich diese Bewegung parallel zu der Nut 118 vollführen.

Das Verfahren endet dann in einem Stoppschritt 158. Das Beleuchtungsmodul 24 ist nunmehr aus dem entsprechenden Magazinplatz 42, 44, 46 entnommen.

In einer Ausführungsform des Verfahrens 140, die letztlich ein Wechseln des Beleuchtungsmoduls 24 bereitstellt, werden vor dem Schritt 46 zwei Schritte 154, 156 ausgeführt.

Dabei wird zunächst ein bereits mit dem optischen Sensor 22 gekoppeltes Beleuchtungsmodul in einem der Magazinplätze 42, 44, 46 abgelegt.

Dies erfolgt, indem zunächst in dem Schritt 154 das mit dem optischen Sensor 22 gekoppelte zweite Beleuchtungsmodul in einen jeweiligen Magazinplatz 42, 44, 46 eingefahren wird, wie dies beispielsweise im Zusammenhang mit der Fig. 7 beschrieben wurde.

Ist das Beleuchtungsmodul 24 dann mit dem entsprechenden Magazinplatz 42, 44, 46 gekoppelt, wird die Pinole 32 in die Z-Richtung 112 bewegt. Dabei kann gegebenenfalls unterstützend der Elektromagnet 76 geschaltet sein. Auf diese Weise wird dann die von dem Permanentmagnet 74 erzeugte Haltekraft überwunden und der optische Sensor 22 von dem Beleuchtungsmodul 24 getrennt. Nun kann mit den Schritten 146 bis 158 fortgefahren werden, um ein weiteres Beleuchtungsmodul 24 mit dem optischen Sensor 22 zu koppeln.

## Patentansprüche

1. Beleuchtungsmodul (24) für ein Koordinatenmessgerät (10) zum Vermessen eines Werkstücks mittels eines optischen Sensors (22), wobei das Beleuchtungsmodul (24) mit dem optischen Sensor (22) zumindest mittelbar koppelbar ist, wobei das Beleuchtungsmodul (24) einen Grundkörper (61) mit einer Sensorseite (62) und einer Werkstückseite (64) aufweist, wobei die Sensorseite (62) eine erste Schnittstelleneinrichtung (58) zumindest zum sensorseitigen Koppeln des Beleuchtungsmoduls (24) in einer definierten Lage aufweist, und wobei das Beleuchtungsmodul (24) mindestens eine Beleuchtungsanordnung (88, 104, 106) zum Beleuchten des Werkstücks (18) aufweist, **dadurch gekennzeichnet, dass** der Grundkörper (61) die Form eines Rings mit einem freien Zentralbereich (78) und einem Randbereich (80) aufweist, wobei die mindestens eine Beleuchtungsanordnung (88, 104, 106) und die erste Schnittstelleneinrichtung (58) in dem Randbereich (80) angeordnet sind, wobei das Beleuchtungsmodul (24) eine Wechselschnittstelleneinrichtung (96) zum Koppeln des Beleuchtungsmoduls (24) mit einem Magazinplatz (42, 44, 46) des Koordinatenmessgeräts (10) aufweist, und wobei die erste Schnittstelleneinrichtung (58) eine mechanische Kopplungseinrichtung zum sensorseitigen Koppeln des Beleuchtungsmoduls (24) und/oder zumindest einen Permanentmagneten (74) zum sensorseitigen Koppeln des Beleuchtungsmoduls (24) aufweist.

2. Beleuchtungsmodul nach Anspruch 1, **dadurch gekennzeichnet, dass** die mindestens eine Beleuchtungsanordnung (88, 104, 106) mindestens einen Lichtleiter (89, 103) und/oder mindestens ein refraktives optisches Element (90) und/oder mindestens ein diffraktives optisches Element (92) und/oder mindestens ein holografisches optisches Element (94) und/oder mindestens ein reflektierendes optisches Element (93) aufweist.

3. Beleuchtungsmodul nach Anspruch 1 oder 2, **dadurch gekennzeichnet, dass** die mindestens eine Beleuchtungsanordnung (88, 104, 106) einen ringförmigen Lichtleiter (89) aufweist.

4. Beleuchtungsmodul nach einem der Ansprüche 1 bis 3, **dadurch gekennzeichnet, dass** das Beleuchtungsmodul (24) mehrere Beleuchtungsanordnungen (88, 104, 106) aufweist, die jeweils zumindest einen Lichtleiter (89, 103) aufweisen.

5. Beleuchtungsmodul nach einem der Ansprüche 1 bis 4, **dadurch gekennzeichnet, dass** die mindestens eine Beleuchtungsanordnung (88, 104, 106) eine Lichtquelle (102) aufweist.

6. Beleuchtungsmodul nach Anspruch 5, **dadurch gekennzeichnet, dass** die mindestens eine Lichtquelle (102) eine LED oder eine OLED oder ein Laser ist.

7. Beleuchtungsmodul nach einem der Ansprüche 1 bis 6, **dadurch gekennzeichnet, dass** das die erste Schnittstelleneinrichtung (58) des Beleuchtungsmoduls (24) eine Energieempfangseinrichtung (77) zum Empfangen von Energie, insbesondere von elektrischer Energie, aufweist.

8. Beleuchtungsmodul nach einem der Ansprüche 1 bis 7, **dadurch gekennzeichnet, dass** der Grundkörper (61) die Form eines kreisförmigen Rings aufweist.

9. Beleuchtungsmodul nach einem der Ansprüche 1 bis 8, **dadurch gekennzeichnet, dass** das Beleuchtungsmodul (24) eine zweite Schnittstelleneinrichtung (110) zum werkstückseitigen Koppeln des Beleuchtungsmoduls (24) mit einem weiteren Beleuchtungsmodul (108) oder einem taktilen Sensor aufweist.

10. Beleuchtungsmodul nach einem der Ansprüche 1 bis 9, **dadurch gekennzeichnet, dass** das Beleuchtungsmodul (24) eine Identifikationseinrichtung (98) zum Identifizieren zumindest eines Typs des Beleuchtungsmoduls (24) aufweist.

11. Koordinatenmessgerät zum Vermessen eines Werkstücks (18) mittels eines optischen Sensors (22), **dadurch gekennzeichnet, dass** das Koordinatenmessgerät (10) mindestens ein Beleuchtungsmodul (24, 116) nach einem der Ansprüche 1 bis 10, und eine Halteeinrichtung (40) mit mindestens einem Magazinplatz (42, 44, 46) für das Beleuchtungsmodul (24, 116) aufweist.

12. Verfahren (140) zum Aufnehmen eines Beleuchtungsmoduls (24) eines Koordinatenmessegeräts (10) zum Vermessen eines Werkstücks (18) mittels eines optischen Sensors (22), wobei das Koordinatenmessgerät (10) mindestens ein erstes Beleuchtungsmodul (24, 116), das mit dem optischen Sensor (22) zumindest mittelbar koppelbar ist, und eine Halteeinrichtung (40) mit mindestens einem ersten Magazinplatz (42, 44, 46) für das erste Beleuchtungsmodul (24, 116) aufweist, wobei das Beleuchtungsmodul (24) einen Grundkörper (61) mit einer Sensorseite (62) und einer Werkstückseite (64) aufweist, wobei die Sensorseite (62) eine erste Schnittstelleneinrichtung (58) zumindest zum sensorseitigen Koppeln des Beleuchtungsmoduls (24) in einer definierten Lage aufweist, und wobei das Beleuchtungsmodul (24) mindestens eine Beleuchtungsanordnung (88, 104, 106) zum Beleuchten des Werkstücks (18) aufweist, wobei der Grundkörper (61) die Form eines Rings mit einem freien Zentralbereich (78) und einem Randbereich (80) aufweist, wobei die mindestens eine Beleuchtungsanordnung (88, 104, 106) und die erste Schnittstelleneinrichtung (58) in dem Randbereich (80) angeordnet sind, wobei das Beleuchtungsmodul (24) eine Wechselschnittstelleneinrichtung (96) zum Koppeln des Beleuchtungsmoduls (24) mit dem ersten Magazinplatz (42, 44, 46) des Koordinatenmessgeräts (10) aufweist, und wobei die erste Schnittstelleneinrichtung (58) eine mechanische Kopplungseinrichtung zum sensorseitigen Koppeln des Beleuchtungsmoduls (24) und/oder zumindest einen Permanentmagneten (74) zum sensorseitigen Koppeln des Beleuchtungsmoduls (24) aufweist, mit den folgenden Schritten:
- Bewegen (146) des optischen Sensors (22) des Koordinatenmessgeräts (10) und eines das erste Beleuchtungsmodul (24, 116) aufweisenden ersten Magazinplatzes (42) relativ zueinander in eine erste Position, in der der optische Sensor (22) und das erste Beleuchtungsmodul (24, 116) mittels einer translatorischen und/oder rotatorischen Bewegung (120) relativ zueinander zumindest mittelbar koppelbar sind,
- Ausführen (148) einer translatorischen und/oder rotatorischen relativen Bewegung zwischen dem optischen Sensor (22) und dem ersten Beleuchtungsmodul (24, 116) zum zumindest mittelbaren Koppeln des optischen Sensors (22) mit dem ersten Beleuchtungsmodul (24, 116), und
- Bewegen (150) des mit dem optischen Sensor (22) zumindest mittelbar gekoppelten ersten Beleuchtungsmoduls (24) aus dem ersten Magazinplatz (42).

13. Verfahren nach Anspruch 12, **dadurch gekennzeichnet, dass** das die Halteeinrichtung (40) mindestens den ersten Magazinplatz (42) und einen zweiten Magazinplatz (44) aufweist, wobei der optische Sensor (22) zu Beginn des Verfahrens (140) zumindest mittelbar mit einem zweiten Beleuchtungsmodul (24, 116) gekoppelt ist, und wobei zunächst die folgenden Schritte ausgeführt werden:
- Bewegen (154) des mit dem optischen Sensor (22) zumindest mittelbar gekoppelten zweiten Beleuchtungsmoduls (24, 116) in den zweiten Magazinplatz (44),
- Ausführen (156) einer translatorischen und/oder rotatorischen relativen Bewegung zwischen dem optischen Sensor (22) und dem zweiten Beleuchtungsmodul (24, 116) zum Entkoppeln des optischen Sensors (22) von dem zweiten Beleuchtungsmodul (24, 116).

14. Verfahren nach Anspruch 12, **dadurch gekennzeichnet, dass** der optische Sensor (22) zu Beginn des Verfahrens (140) zumindest mittelbar mit einem zweiten Beleuchtungsmodul (24, 116) gekoppelt ist, und wobei das Verfahren (140) ausgeführt wird, um das erste Beleuchtungsmodul (24, 116) mit dem zweiten Beleuchtungsmodul (24, 116) zu koppeln.

## Claims

1. Illumination module (24) for a coordinate measuring machine (10) for measuring a workpiece using an optical sensor (22), wherein the illumination module (24) is able to be at least indirectly coupled to the optical sensor (22), wherein the illumination module (24) has a base body (61) with a sensor side (62) and a workpiece side (64), wherein the sensor side (62) has a first interface device (58) at least for sensor-side coupling the illumination module (24) in a defined location, and wherein the illumination module (24) has at least one illumination arrangement (88, 104, 106) for illuminating the workpiece (18), **characterized in that** the base body (61) has the shape of a ring with a free central region (78) and a peripheral region (80), wherein the at least one illumination arrangement (88, 104, 106) and the first interface device (58) are arranged in the peripheral region (80), wherein the illumination module (24) has a change interface device (96) for coupling the illumination module (24) to a magazine site (42, 44, 46) of the coordinate measuring machine (10), and wherein the first interface device (58) has a mechanical coupling device for sensor-side coupling the illumination module (24) and/or at least one permanent magnet (74) for sensor-side coupling the illumination module (24).

2. Illumination module according to Claim 1, **characterized in that** the at least one illumination arrangement (88, 104, 106) has at least one light guide (89, 103) and/or at least one refractive optical element (90) and/or at least one diffractive optical element (92) an/or at least one holographic optical element (94) and/or at least one reflective optical element (93).

3. Illumination module according to Claim 1 or 2, **characterized in that** the at least one illumination arrangement (88, 104, 106) has a ring-shaped light guide (89).

4. Illumination module according to one of Claims 1 to 3, **characterized in that** the illumination module (24) has a plurality of illumination arrangements (88, 104, 106) that each have at least one light guide (89, 103) .

5. Illumination module according to one of Claims 1 to 4, **characterized in that** the at least one illumination arrangement (88, 104, 106) has a light source (102).

6. Illumination module according to Claim 5, **characterized in that** the at least one light source (102) is an LED or an OLED or a laser.

7. Illumination module according to one of Claims 1 to 6, **characterized in that** the first interface device (58) of the illumination module (24) has an energy receiving device (77) for receiving energy, in particular electrical energy.

8. Illumination module according to one of Claims 1 to 7, **characterized in that** the base body (61) has the shape of a circular ring.

9. Illumination module according to one of Claims 1 to 8, **characterized in that** the illumination module (24) has a second interface device (110) for workpiece-side coupling the illumination module (24) to a further illumination module (108) or to a tactile sensor.

10. Illumination module according to one of Claims 1 to 9, **characterized in that** the illumination module (24) has an identification device (98) for identifying at least a type of the illumination module (24).

11. Coordinate measuring machine for measuring a workpiece (18) using an optical sensor (22), **characterized in that** the coordinate measuring machine (10) has at least one illumination module (24, 116) according to one of Claims 1 to 10, and a holding device (40) with at least one magazine site (42, 44, 46) for the illumination module (24, 116).

12. Method (140) for receiving an illumination module (24) of a coordinate measuring machine (10) for measuring a workpiece (18) using an optical sensor (22), wherein the coordinate measuring machine (10) has at least one first illumination module (24, 116), which is able to be at least indirectly coupled to the optical sensor (22), and a holding device (40) with at least one first magazine site (42, 44, 46) for the first illumination module (24, 116), wherein the illumination module (24) has a base body (61) with a sensor side (62) and a workpiece side (64), wherein the sensor side (62) has a first interface device (58) at least for sensor-side coupling the illumination module (24) in a defined location, and wherein the illumination module (24) has at least one illumination arrangement (88, 104, 106) for illuminating the workpiece (18), wherein the base body (61) has the shape of a ring with a free central region (78) and a peripheral region (80), wherein the at least one illumination arrangement (88, 104, 106) and the first interface device (58) are arranged in the peripheral region (80), wherein the illumination module (24) has a change interface device (96) for coupling the illumination module (24) to the first magazine site (42, 44, 46) of the coordinate measuring machine (10), and wherein the first interface device (58) has a mechanical coupling device for sensor-side coupling the illumination module (24) and/or at least one permanent magnet (74) for sensor-side coupling the illumination module (24), having the following steps:
- moving (146) the optical sensor (22) of the coordinate measuring machine (10) and of a first magazine site (42), having the first illumination module (24, 116), relative to one another into a first position in which the optical sensor (22) and the first illumination module (24, 116) are able to be at least indirectly coupled by way of a translational and/or rotational movement (120) relative to one another,
- performing (148) a translational and/or rotational relative movement between the optical sensor (22) and the first illumination module (24, 116) for at least indirectly coupling the optical sensor (22) to the first illumination module (24, 116), and
- moving (150) the first illumination module (24), which is at least indirectly coupled to the optical sensor (22), out of the first magazine site (42).

13. Method according to Claim 12, **characterized in that** the holding device (40) has at least the first magazine site (42) and a second magazine site (44), wherein the optical sensor (22) is coupled at least indirectly to a second illumination module (24, 116) at the beginning of the method (140), and wherein the following steps are initially performed:
- moving (154) the second illumination module (24, 116), which is at least indirectly coupled to the optical sensor (22), into the second magazine site (44),
- performing (156) a translational and/or rotational relative movement between the optical sensor (22) and the second illumination module (24, 116) for decoupling the optical sensor (22) from the second illumination module (24, 116).

14. Method according to Claim 12, **characterized in that** the optical sensor (22) is coupled at least indirectly to a second illumination module (24, 116) at the beginning of the method (140), and wherein the method (140) is performed to couple the first illumination module (24, 116) to the second illumination module (24, 116).

## Revendications

1. Module d'éclairage (24) pour un appareil de mesure de coordonnées (10) afin de mesurer une pièce de fabrication au moyen d'un capteur optique (22), le module d'éclairage (24) pouvant être couplé au moins indirectement au capteur optique (22), le module d'éclairage (24) comportant un corps de base (61) doté d'un côté capteur (62) et d'un côté pièce de fabrication (64), dans lequel le côté capteur (62) comporte un premier dispositif d'interface (58) au moins pour le couplage côté capteur du module d'éclairage (24) dans une position définie, et le module d'éclairage (24) comportant au moins un agencement d'éclairage (88, 104, 106) afin d'éclairer la pièce de fabrication (18), **caractérisé en ce que** le corps de base (61) possède la forme d'une bague avec une zone centrale libre (78) et une zone de bordure (80), dans lequel l'au moins un agencement d'éclairage (88, 104, 106) et le premier dispositif d'interface (58) sont agencés dans la zone de bordure (80), le module d'éclairage (24) comportant un dispositif d'interface interchangeable (96) afin de coupler le module d'éclairage (24) avec un emplacement de magasin (42, 44, 46) de l'appareil de mesure de coordonnées (10), et dans lequel le premier dispositif d'interface (58) comporte un dispositif de couplage mécanique afin de coupler côté capteur le module d'éclairage (24) et/ou au moins un aimant permanent (74) afin de coupler côté capteur le module d'éclairage (24).

2. Module d'éclairage selon la revendication 1, **caractérisé en ce que** l'au moins un agencement d'éclairage (88, 104, 106) comporte au moins un conducteur optique (89, 103) et/ou au moins un élément optique réfractif (90) et/ou au moins un élément optique diffractif (92) et/ou au moins un élément optique holographique (94) et/ou au moins un élément optique réfléchissant (93).

3. Module d'éclairage selon la revendication 1 ou 2, **caractérisé en ce que** l'au moins un agencement d'éclairage (88, 104, 106) comporte un conducteur optique annulaire (89).

4. Module d'éclairage selon l'une des revendications 1 à 3, **caractérisé en ce que** le module d'éclairage (24) comporte plusieurs agencements d'éclairage (88, 104, 106), lesquels comportent respectivement au moins un conducteur optique (89, 103).

5. Module d'éclairage selon l'une des revendications 1 à 4, **caractérisé en ce que** l'au moins un agencement d'éclairage (88, 104, 106) comporte une source de lumière (102).

6. Module d'éclairage selon la revendication 5, **caractérisé en ce que** l'au moins une source de lumière (102) est une LED ou une OLED ou un laser.

7. Module d'éclairage selon l'une des revendications 1 à 6, **caractérisé en ce que** le premier dispositif d'interface (58) du module d'éclairage (24) comporte un dispositif récepteur d'énergie (77) afin de recevoir de l'énergie, en particulier de l'énergie électrique.

8. Module d'éclairage selon l'une des revendications 1 à 7, **caractérisé en ce que** le corps de base (61) possède la forme d'un anneau circulaire.

9. Module d'éclairage selon l'une des revendications 1 à 8, **caractérisé en ce que** le module d'éclairage (24) comporte un deuxième dispositif d'interface (110) au moins pour le couplage côté pièce de fabrication du module d'éclairage (24) avec un module d'éclairage supplémentaire (108) ou avec un capteur tactile.

10. Module d'éclairage selon l'une des revendications 1 à 9, **caractérisé en ce que** le module d'éclairage (24) comporte un dispositif d'identification (98) afin d'identifier au moins un type de module d'éclairage (24) .

11. Appareil de mesure de coordonnées destiné à mesurer une pièce de fabrication (18) au moyen d'un capteur optique (22), **caractérisé en ce que** l'appareil de mesure de coordonnées (10) comporte au moins un module d'éclairage (24, 116) selon l'une des revendications 1 à 10, et un dispositif de maintien (40) doté d'au moins un emplacement de magasin (42, 44, 46) pour le module d'éclairage (24, 116).

12. Procédé (140) d'accueil d'un module d'éclairage (24) d'un appareil de mesure de coordonnées (10) afin de mesurer une pièce de fabrication (18) au moyen d'un capteur optique (22), dans lequel l'appareil de mesure de coordonnées (10) comporte au moins un premier module d'éclairage (24, 116), lequel peut être couplé au moins indirectement au capteur optique (22), et un dispositif de maintien (40) doté d'au moins un premier emplacement de magasin (42, 44, 46) pour le premier module d'éclairage (24, 116), dans lequel le module d'éclairage (24) comporte un corps de base (61) doté d'un côté capteur (62) et d'un côté pièce de fabrication (64), dans lequel le côté capteur (62) comporte un premier dispositif d'interface (58) au moins pour le couplage côté capteur du module d'éclairage (24) dans une position définie, et dans lequel le module d'éclairage (24) comporte au moins un agencement d'éclairage (88, 104, 106) afin d'éclairer la pièce de fabrication (18), dans lequel le corps de base (61) possède la forme d'une bague avec une zone centrale libre (78) et une zone de bordure (80), dans lequel l'au moins un agencement d'éclairage (88, 104, 106) et le premier dispositif d'interface (58) sont agencés dans la zone de bordure (80), dans lequel le module d'éclairage (24) comporte un dispositif d'interface interchangeable (96) afin de coupler le module d'éclairage (24) avec le premier emplacement de magasin (42, 44, 46) de l'appareil de mesure de coordonnées (10), et dans lequel le premier dispositif d'interface (58) comporte un dispositif de couplage mécanique afin de coupler côté capteur le module d'éclairage (24) et/ou au moins un aimant permanent (74) afin de coupler côté capteur le module d'éclairage (24), avec les étapes suivantes :
- mouvement (146) l'un par rapport à l'autre du capteur optique (22) de l'appareil de mesure de coordonnées (10) et d'un premier emplacement de magasin (42) comportant le premier module d'éclairage (24, 116) dans une première position, où le capteur optique (22) et le premier module d'éclairage (24, 116) peuvent être couplés au moins indirectement au moyen d'un mouvement (120) de translation et/ou de rotation l'un par rapport à l'autre,
- exécution (148) d'un mouvement relatif de translation et/ou de rotation entre le capteur optique (22) et le premier module d'éclairage (24, 116) à des fins de couplage au moins indirect du capteur optique (22) avec le premier module d'éclairage (24, 116), et
- mouvement (150) du premier module d'éclairage (24) couplé au moins indirectement au capteur optique (22) hors du premier emplacement de magasin (42).

13. Procédé selon la revendication 12, **caractérisé en ce que** le dispositif de maintien (40) comporte au moins le premier emplacement de magasin (42) et un deuxième emplacement de magasin (44), dans lequel le capteur optique (22) est couplé au moins indirectement à un deuxième module d'éclairage (24, 116) au début du procédé (140), et dans lequel les étapes suivantes sont en outre exécutées :
- mouvement (154) du deuxième module d'éclairage (24, 116) couplé au moins indirectement au capteur optique (22) hors du deuxième emplacement de magasin (44),
- exécution (156) d'un mouvement relatif de translation et/ou de rotation entre le capteur optique (22) et le deuxième module d'éclairage (24, 116) afin de découpler le capteur optique (22) du deuxième module d'éclairage (24, 116).

14. Procédé selon la revendication 12, **caractérisé en ce que** le capteur optique (22) est couplé au moins indirectement à un deuxième module d'éclairage (24, 116) au début du procédé (140), et le procédé (140) étant exécuté afin de coupler le premier module d'éclairage (24, 116) avec le deuxième module d'éclairage (24, 116).
